# EUROPEAN PATENT APPLICATION

(11) **EP 2 214 368 A1**
(43) Date of publication of application: **04.08.2010**
(21) Application number: 08855081.9
(22) Date of filing: 14.11.2008
(51) Int. Cl.: H04L 29/06

(54) **A WAPI UNICAST SECRET KEY NEGOTIATION METHOD**

(30) Priority: 16.11.2007 CN 200710019092
(71) Applicant: China Iwncomm Co., Ltd., Xi'an, Shaanxi 710075 (CN)
(72) Inventor: TIE, Manxia, Shaanxi 710075 (CN); CAO, Jun, Shaanxi 710075 (CN); PANG, Liaojun, Shaanxi 710075 (CN); LAI, Xiaolong, Shaanxi 710075 (CN); HUANG, Zhenhai, Shaanxi 710075 (CN)
(74) Representative: Maiwald Patentanwalts GmbH
(86) International application number: PCT/CN2008/073053
(87) International publication number: WO 2009/067934

(57) **Abstract**

A WAPI unicast secret key negotiation method includes the following steps: 1 a authenticator entity adds a message integrity code onto a unicast secret key negotiation request packet, and transmits it to a authentication supplicant entity; 2 after the authentication supplicant entity receives the unicast secret key negotiation request packet, it performs validation, and it discards the packet directly if it is not correct; the authentication supplicant entity performs other validation if it is correct; when the validation is successful, it responds a unicast secret key negotiation response packet to the authenticator entity; 3 after the authenticator entity receives the unicast secret key negotiation response packet, it performs validation, if the validation is successful, it responds the unicast secret key negotiation acknowledge packet to the authentication supplicant entity; 4 after the authentication supplicant entity receives the unicast secret key negotiation acknowledge packet, it performs validation, if the validation is successful it negotiates and obtains a consistent unicast session secret key. The present invention resolves the DoS attacking problem which exists in the unicast secret key management protocol in the present WAPI security mechanism.

## Description

The present application claims priority to Chinese Patent Application No. 200710019092.8, filed with the Chinese Patent Office on November 16, 2007 and entitled "METHOD FOR NEGOTIATING A WAPI UNICAST KEY", which is hereby incorporated by reference in its entirety.

### Field of the Invention

The present invention relates to the field of information security technology, and in particular to a method for negotiating a WAPI unicast key.

### Background of the Invention

In order to solve the security hole problem existing in the Wired Equivalent Privacy (WEP) security mechanism defined in the international standard ISO/IEC 8802-11 of the Wireless Local Area Network (WLAN), China publishes the WLAN national standard and its amendment 1, in which the WLAN Authentication and Privacy Infrastructure (WAPI) in place of the WEP is used to solve the security problem of WLAN.

The certificate-based or pre-shared key-based authentication and key management protocol are used to implement authentication and key distribution functions in the WAPI. The security mechanism provides a good way to solve the security problem of WLAN. However, due to its overmuch emphasis on security and lacking of consideration on the availability of the protocol during the design, there comes up a Denial of Service (DoS) problem in the unicast key negotiation protocol. As no protection measures are taken in the unicast key negotiation request packet of the WAPI unicast key negotiation protocol, the naked unicast key negotiation request packet may be utilized by an attacker.

At most one handshake is allowed between an Authenticator Entity (AE) and each Authentication Supplicant Entity (ASUE), and the AE has a time-out retransmission function. However, the ASUE does not adopt the same strategy. If the ASUE is configured in a complete state, that is, the ASUE only expects a response to a particular message, provided that the case is: the ASUE receives a unicast key negotiation request packet and transmits a unicast key negotiation response packet which is later lost for various reasons, the AE will not receive the expected unicast key negotiation response packet and will retransmit the unicast key negotiation request packet after time-out. However, as the ASUE expects only a unicast key negotiation acknowledge packet, the ASUE will discard the retransmitted unicast key negotiation request packet, resulting in the failure of the protocol. An attacker may make use of this chance to transmit a fake unicast key negotiation request packet before the transmission of the legal unicast key negotiation request packet, resulting in the ASUE obstructing the protocol. Therefore, during the handshake, the ASUE should enable to receive multiple unicast key negotiation request packets to ensure the continuance of the protocol, that is, the supplicant should enable the simultaneous operation of multiple handshake instances.

Protocol obstruction attack results from the vulnerability of the unicast key negotiation request packet. To address this problem, the ASUE, during the implementation of the protocol, may store multiple Unicast Session Keys (USKs), where, one is a legal USK, and the rest are temporary USKs. The ASUE updates the legal USK only when it receives the unicast key negotiation acknowledgement packet containing an effective Message Integrity Code (MIC). If the attacker transmits multiple unicast key negotiation request packets containing different once-random numbers (Nonce), the ASUE should use a very big storage space to store Nonces contained in all the received unicast key negotiation request packets as well as new locally-generated Nonces and corresponding temporary USKs to ensure that the ASUE completes the handshake and obtains a legal USK. Though it does not take too much to compute the USK and will not cause the exhaustion of the CPU, there is a danger of storage exhaustion if the attacker purposely increases the frequency of the transmission of the fake unicast key negotiation request packet. Such a fakery attack is easy to be carried out and the danger is very serious. Even one successful attack may ruin all efforts made during a previous authentication process.

### Summary of the Invention

An object of the present invention is to solve the above-mentioned technical problems in the background, and provides a method for negotiating a WAPI unicast key, to avert a DoS attack carried out by faking and retransmitting the unicast key negotiation request packet. The technical solution is as follows:

A method for negotiating a WAPI unicast key includes:
1) sending, by an Authenticator Entity, AE, a new unicast key negotiation request packet to an Authentication Supplicant Entity, ASUE, wherein the new unicast key negotiation request packet is formed by adding a Message Integrity Code, MIC to the primary definition content of a unicast key negotiation request packet;
2) verifying, by the ASUE, whether the MIC contained in the new unicast key negotiation request packet is correct on reception of the new unicast key negotiation request packet;
   if the MIC is not correct, discarding the new unicast key negotiation request packet;
   if the MIC is correct, verifying the new unicast key negotiation request packet, and sending a unicast key negotiation response packet to the AE if the verification is successful;
3) on reception of the unicast key negotiation response packet, verifying, by the AE, the unicast key negotiation response packet, and returning a unicast key negotiation acknowledgement packet to the ASUE if the verification is successful;
4) on reception of the unicast key negotiation acknowledgement packet, verifying, by the ASUE, the unicast key negotiation acknowledgement packet, and accomplishing the unicast key negotiation process between the AE and the ASUE if the verification is successful, to negotiate a common Unicast Session Key, USK;
where, the primary definition content of the unicast key negotiation request packet and the content of the unicast key negotiation response packet and the unicast key negotiation acknowledgement packet are respectively the same as definitions in the standard document of GB 15629.11-2003/XG1-2006, the verification process of the new unicast key negotiation request packet, the unicast key negotiation response packet and the unicast key negotiation acknowledgement packet are respectively the same as definitions in the standard document of GB 15629.11-2003/XG1-2006.

The MIC in the step 1) is a hash value computed by the AE from all fields before the field of MIC by using a negotiated Base Key, BK.

The present invention adds a MIC to the content of the unicast key negotiation request packet of the primary WAPI unicast key negotiation protocol to avoid the fakery of the unicast key negotiation request packet and to further enhance the security and robustness of the protocol. The present invention solves the DoS attack problem of the unicast key negotiation protocol in the existing WAPI security mechanism.

### Detailed Description of the Invention

The present invention is adapted for the security protocol used in particular networks such as WLAN and the wireless metropolitan area network based on the WAPI framework method (Access Control method based on Tri-element Peer Authentication (TePA-AC)).

The method of the invention is detailed as follows:

1) An AE adds a Message Integrity Code (MIC) to the primary definition content of a unicast key negotiation request packet to form a new unicast key negotiation request packet, and sends the new unicast key negotiation request packet to an ASUE, where the MIC is a hash value computed by the AE from all fields before the field of MIC by using a Base Key (BK) negotiated in an authentication phase.

2) On receiving the new unicast key negotiation request packet, the ASUE verifies whether the MIC contained in the new unicast key negotiation request packet is correct; if the MIC is not correct, the ASUE discards the new unicast key negotiation request packet directly; if the MIC is correct, the ASUE performs a primary verification. The ASUE sends a unicast key negotiation response packet to the AE if the verification is successful. The definition content of the unicast key negotiation response packet is the same as the primary definition. The content of the unicast key negotiation response packet is the same as the primary definition.

It shall be noted that the primary definition and the primary verification in the description refer to the definition and verification in the GB 15629.11-2003/XG1-2006 standard document.

3) On receiving the unicast key negotiation response packet, the AE performs a primary verification on the unicast key negotiation response packet, and returns a unicast key negotiation acknowledgement packet to the ASUE if the verification is successful. The definition content of the unicast key negotiation acknowledgement packet is the same as a primary definition.

4) On receiving the unicast key negotiation acknowledgement packet, the AE performs a primary verification on the unicast key negotiation acknowledgement packet; and if the verification is successful, the unicast key negotiation process is accomplished between the AE and the ASUE, to negotiate a common USK.

## Claims

1. A method for negotiating a WAPI unicast key, comprising:
1) sending, by an Authenticator Entity, AE, a new unicast key negotiation request packet to an Authentication Supplicant Entity, ASUE, wherein the new unicast key negotiation request packet is formed by adding a Message Integrity Code, MIC to the primary definition content of a unicast key negotiation request packet;
2) verifying, by the ASUE, whether the MIC contained in the new unicast key negotiation request packet is correct on reception of the new unicast key negotiation request packet;
if the MIC is not correct, discarding the new unicast key negotiation request packet;
if the MIC is correct, verifying the new unicast key negotiation request packet, and sending a unicast key negotiation response packet to the AE if the verification is successful;
3) on reception of the unicast key negotiation response packet, verifying, by the AE, the unicast key negotiation response packet, and returning a unicast key negotiation acknowledgement packet to the ASUE if the verification is successful;
4) on reception of the unicast key negotiation acknowledgement packet, verifying, by the ASUE, the unicast key negotiation acknowledgement packet, and accomplishing the unicast key negotiation process between the AE and the ASUE if the verification is successful, to negotiate a common Unicast Session Key, USK;
wherein, the primary definition content of the unicast key negotiation request packet and the content of the unicast key negotiation response packet and the unicast key negotiation acknowledgement packet are respectively the same as definitions in the standard document of GB 15629.11-2003/XG1-2006, the verification process of the new unicast key negotiation request packet, the unicast key negotiation response packet and the unicast key negotiation acknowledgement packet are respectively the same as definitions in the standard document of GB 15629.11-2003/XG1-2006.

2. The method for negotiating a WAPI unicast key according to claim 1, wherein the MIC in the step 1) is a hash value computed by the AE from all fields before the field of MIC by using a negotiated Base Key, BK.
